**Europäisches Patentamt**

**European Patent Office**

**Office européen des brevets**

(19)

(11) Veröffentlichungsnummer : **0 109 693
B1**

(12) **EUROPÄISCHE PATENTSCHRIFT**

(45) Veröffentlichungstag der Patentschrift :
**12.02.86**

(51) Int. Cl.⁴ : **F 16 B 25/00**, F 16 B 23/00

(21) Anmeldenummer : **83201210.8**

(22) Anmeldetag : **22.08.83**

(54) **Verbindungselement für Verpackungslagen.**

(30) Priorität : **23.09.82 AT 3544/82**

(43) Veröffentlichungstag der Anmeldung :
**30.05.84 Patentblatt 84/22**

(45) Bekanntmachung des Hinweises auf die Patenterteilung : **12.02.86 Patentblatt 86/07**

(84) Benannte Vertragsstaaten :
**BE CH DE FR GB IT LI LU NL SE**

(56) Entgegenhaltungen :
**EP-A- 0 039 414
EP-A- 0 058 252
DE-C-   763 737
FR-A- 2 261 441
FR-A- 2 401 349
FR-A- 2 403 712
GB-A-   691 793**

(73) Patentinhaber : **REHAU AG + Co
Rheniumhaus
D-8673 Rehau (DE)**

(72) Erfinder : **Berger, Helmut
Strass 47
A-3040 Neulengbach (AT)**

EP 0 109 693 B1

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung betrifft ein Verbindungselement für Verpackungslagen, insbesondere solche aus Wellpappe, das ein mit einem Schraubgewinde versehener Bolzen ist, der eine den Durchmesser des Schraubgewindes überragende Kopfplatte aufweist, wobei zentrisch in der Kopfplatte eine Ausnehmung vorgesehen ist, die in ihrem kopfplattenseitigen Bereich als Eingriffsöffnung für ein Drehwerkzeug ausgebildet ist.

Verpackungen für Industrieprodukte wie etwa Kühlschränke, Fernsehgeräte oder dgl. bestehen aus Karton, insbesondere aus Wellpappenzuschnitten, die zu Rahmen und Kisten gefaltet und sodann mittels Klammern zusammengehalten werden. Der Aufwand bei der Herstellung der Klammerverbindungen ist groß, die erforderlichen Vorrichtungen sind kompliziert und störungsanfällig und die Verpackungen können sehr häufig nur durch Gewaltanwendung geöffnet werden. Dabei besteht erhöhte Verletzungsgefahr durch die scharfen Klammern.

Besonders deutlich wird der Nachteil bekannter Verpackungen der beschriebenen Art für Zwischenprodukte oder Halbfertigwaren, die in einem Montagewerk in großer Zahl anfallen und zur Endfertigung geöffnet werden müssen. Ein Weiterverwenden der Verpackungen ist vielfach nicht möglich.

Aus der Französischen Patentschrift 2 401 349 ist eine Schraube bekannt geworden, die zum Festlegen von Montageteilen in bruchempfindlichem, wenig verformbarem Material dient.

Entgegen bekannter Schraubenlösungen, wie sie beispielsweise bei Holzschrauben vorliegen, hat diese Schraube aus dem Stand der Technik einen verhältnismäßig dünnen Kernbereich, von dem ein Gewinde mit einer großen Tiefe im Vergleich zum Kerndurchmesser aufragt. Das Gewinde hat eine relativ geringe Steigung und weist demzufolge zwischen den einzelnen Steigungen relativ kleine Öffnungsbereiche auf, in welche beim Eindrehen der Schraube in beispielsweise geschäumtem Kunststoff dieses Kunststoffmaterial eindringt und die Schraube festhält. Die unverhältnismäßig große Höhe der einzelnen Gewindegänge dient zur Verhinderung des Ausreissens der Schraube aus dem verhältnismäßig brüchigen Material, wie es beispielsweise geschäumter Kunststoff darstellt. Für das Eindrehen in Wellpappenabschnitte ist diese bekannte Schraube wenig geeignet, da die Anzahl der Schraubengänge nicht erforderlich ist und auch die Tiefe der Gewindegänge nicht benötigt wird, um ein Ausreißen der Schraube aus dem Wellpappenzuschnitt zu verhindern.

Hier setzt die Erfindung ein, die es sich zur Aufgabe gestellt hat, die Nachteile der bekannten Verbindungselemente wie Klammern für Verpackungslagen, insbesondere solchen aus Wellpappe zu vermeiden. Darüber hinaus ist es Aufgabe der Erfindung, einen mit einem Schraubgewinde versehenen Bolzen für das Zusammenhalten solcher Verpackungslagen, insbesondere aus Wellpappe anzugeben, dessen Gewindegang so ausgebildet ist, daß ein einfaches Eindrehen in die Wellpappenabschnitte ohne Vorlochen möglich ist. Erfindungsgemäß ist dazu vorgesehen, daß die Spitze des Schraubgewindes außerhalb der Symmetrieachse der Kopfplatte liegt.

Das Verbindungselement ist selbstschneidend ausgeführt. Es wird drehfest auf einen Dorn eines Schraubgerätes, z. B. eines pneumatischen Schraubendrehers, aufgesetzt und mit wenigen Drehungen in die Kartonlagen eingebracht. Ein Vorlochen ist nicht mehr erforderlich.

Beim Eindrehen der Schraube hat die versetzte Spitze die Aufgabe, in die Wellpappe eine Öffnung zu reißen. Das erste Drittel der Schraube schafft hierbei einen entsprechenden Durchbruch. Beim weiteren Eindrehen erweitert der Kern der Schraube diesen Durchbruch, während sich die Schraube durch das exzentrische Gewinde, welches den geschaffenen Durchbruch nicht wesentlich vergrößert, eindreht. Die zu verbindenden Wellpappenteile werden zwischen den Gewindeflanken einerseits bzw. zwischen den Gewindeflanken und dem Schraubkopf andererseits eingespannt. Hierbei können die Gesamtlänge der Schraube, die Steigung des Gewindes und der Schraubenkopfdurchmesser je nach Einsatzzweck variiert werden. Das Verbindungselement kann kegelförmigen Umriß haben. Insbesondere ist es vorteilhaft, wenn die Gesamtlänge des Verbindungselementes etwa dem Durchmesser der Kopfplatte entspricht.

In einer besonderen Ausführungsform der Erfindung ist der Bolzen als Gewindekern kegelförmig ausgebildet und die jeweilige Gewindetiefe entspricht etwa dem örtlichen Bolzendurchmesser. So ist bei dem genannten, zweckmäßigen Ausführungsbeispiel die Gewindetiefe im Bereich der halben Länge des Verbindungselementes gleich dem Kerndurchmesser (Kegeldurchmesser) an dieser Stelle.

Das Verbindungselement wird in zweckmäßiger Weise aus Kunststoff, gegebenenfalls mit Zuschlagstoffen aus Abfallprodukten, wie Metallspänen, hergestellt. Liegen die Metallspäne an der Oberfläche oder treten sie aus der Oberfläche aus, dann wird dadurch eine erhöhte Reibung und so ein besserer Sitz des Verbindungselementes erreicht. Ferner ist es zweckmäßig, wenn die Ausnehmung im Bereich der Kopfplatte als Prisma ausgebildet ist, an welches ein zylindrischer oder konischer Hohlraum im Inneren des Bolzens anschließt.

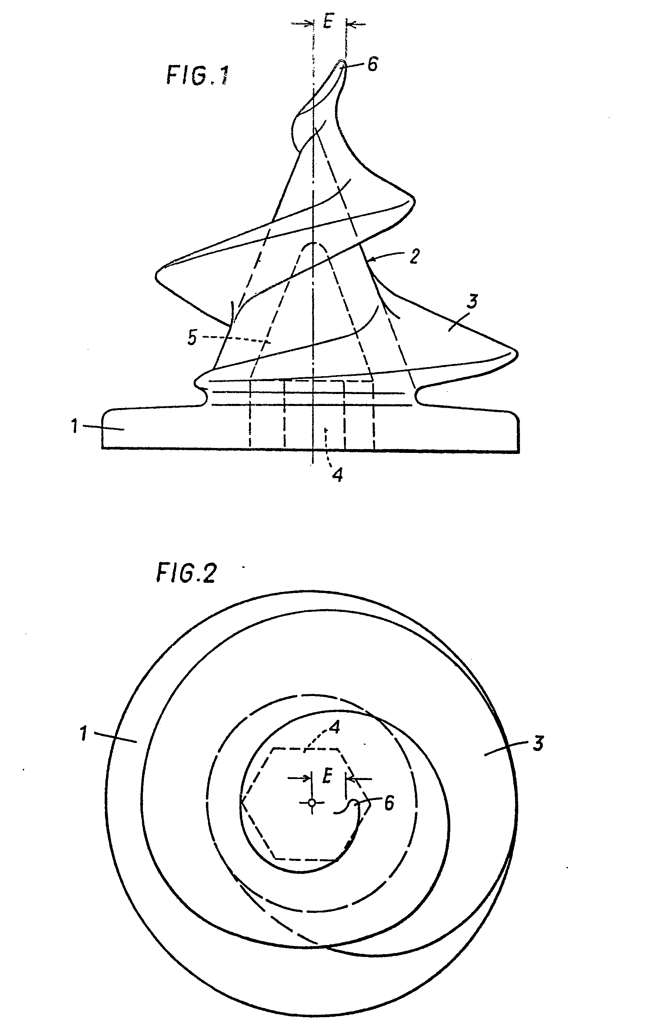

Ein Ausführungsbeispiel des Erfindungsgegenstandes ist in den Zeichnungen dargestellt. Fig. 1 zeigt eine Seitenansicht eines Verbindungselementes und Fig. 2 eine Draufsicht auf ein Verbindungselement gemäß der Erfindung.

Das Verbindungselement besteht aus einer Kopfplatte 1 mit einem angesetzten Bolzen 2 als Kern eines kurzen Gewindes 3. Das Gewinde 3 ist stark ausgeprägt, insbesondere weist es eine große Gewindetiefe auf, damit Wellpappeplatten großflächig übergriffen und beim Verschrauben zusammengepreßt werden können. In der Kopfplatte 1 ist eine Ausnehmung 4 in Form eines Prismas vorgesehen, in welche ein Schlüssel (z. B. Sechskantinbus) zum Ein- bzw. Ausdrehen des Verbindungselementes eingesetzt werden kann. Im Kern des Verbindungselementes ist eine hohe Materialkonzentration vorhanden, die bei der Herstellung zu langen Kühlzeiten führt. Um dem eintgegenzuwirken ist in Verlängerung der prismatischen Ausnehmung 4 ein konischer Hohlraum 5 vorgesehen.

Die Spitze 6 des Gewindes 3 ist gegenüber der Mittelachse der Kopfplatte 1 seitlich versetzt (Exzentrizität E). Wird das Verbindungselement am Karton angesetzt und wird es gedreht (z. B. mittels eines druckluftbetriebenen Schraubendrehers), dann reißt die exzentrische, im Kreis umlaufende Spitze 6 die glatte Oberfläche des Kartons auf und gelangt mit den darunter liegenden Schichten in Berührung, in welche das Gewinde hineinschneidet. Der Winkel der Gewindeflanken und auch die Steigungen der Schraube können speziell für den Einsatzzweck des Verschraubens von Kartonagenverpackungen empirisch ermittelt werden. Es sollte hierbei eine Verbindung von 3-fach Wellpappe bei den Stützen der Kartonage von der schwächsten Qualität von ca. 10,8 mm bis zu den Eckverbindungen der stärksten Qualität von ca. 26 mm bei 4-fach Wellpappenstärke möglich sein.

Das erfindungsgemäße Verbindungselement läßt ein schnelles Öffnen der Verbindung zu. Es ist nicht erforderlich, zu diesem Zweck das Verbindungselement über die gesamten Gewindegänge herauszudrehen.

Die dargestellte Ausführungsform ermöglicht ein Öffnen schon nach einer kurzen Drehung nach links. Dieser Effekt tritt infolge der versetzten Gewindeganganordnung ein. Das Werkzeug zum Eindrehen des Verbindungselementes wurde bei dem Ausführungsbeispiel auf ein Drehmoment zwischen 3 und 8 N/m eingestellt.

Die versetzte Spitze macht auch den Einsatz von bereits mehrmals benutzten und aus Kunststoff hergestellten Verbindungselementen möglich. Dabei nutzt sich zwar die scharfe Spitze ab ; durch das versetzte Schraubengewinde bleibt jedoch die gewünschte Wirkung voll erhalten.

Bei nicht versetzter Spitze würde sich diese sehr schnell abnützen. Durch das versetzte Gewinde wird der Druck beim Eindrehen sehr schnell von der Spitze weg auf die Gewindeflanken verlagert, sodaß die Spitze im wesentlichen nur die Aufgabe des Vorlochens hat.

**Patentansprüche**

1. Verbindungselement für Verpackungslagen, insbesondere solche aus Wellpappe, das ein mit einem Schraubgewinde (3) versehener Bolzen (2) ist, der eine den Durchmesser des Schraubgewindes überragende Kopfplatte (1) aufweist, wobei zentrisch in der Kopfplatte eine Ausnehmung (4) vorgesehen ist, die in ihrem Kopfplattenbereich als Eingriffsöffnung für ein Drehwerkzeug ausgebildet ist, dadurch gekennzeichnet, daß die Spitze (6) des Schraubgewindes (3) außerhalb der Symmetrieachse der Kopfplatte (1) liegt.

2. Verbindungselement nach Anspruch 1, dadurch gekennzeichnet, daß die Gesamtlänge des Verbindungselementes etwa dem Durchmesser der Kopfplatte (1) entspricht.

3. Verbindungselement nach einem der Ansprüche 1 bis 2, dadurch gekennzeichnet, daß der Bolzen (2) als Gewindekern kegelförmig ausgebildet ist und die jeweilige Gewindetiefe etwa dem örtlichen Bolzendurchmesser entspricht.

4. Verbindungselement nach einem der Ansprüche 1 bis 3, dadurch gekennzeichnet, daß es aus Kunststoff, gegebenenfalls mit Zuschlagstoffen aus Abfallprodukten, wie Metallspänen, besteht.

5. Verbindungselement nach einem der Ansprüche 1 bis 4, dadurch gekennzeichnet, daß die Ausnehmung (4) im Bereich der Kopfplatte (1) als Prisma ausgebildet ist, an welches ein zylindrischer oder konischer Hohlraum (5) im Inneren des Bolzens (2) anschließt.

**Claims**

1. An assembly element for layers of packaging material, in particular those made of corrugated cardboard, the element consisting of a pin (2) with a screw thread (3), the pin being equipped with a head plate (1) of a diameter exceeding that of the screw thread while a recess (4) is provided centrally in the head plate, the head plate area of the recess being designated as an engaging aperture for a turning tool, the element being characterized in that the point (6) of the screw thread (3) is not in the axis of symmetry of the head plate (1).

2. An assembly element according to Claim 1, characterized in that the total length of the assembly element approximately corresponds to the diameter of the head plate (1).

3. An assembly element according to one of Claims 1 and 2, characterized in that the pin (2), as the core of the screw thread, tapers and that the depth of the thread at any point approximately corresponds to the diameter of the pin at that point.

4. An assembly element according to one of Claims 1 to 3, characterized in that it is made of plastic, with or without additives from waste products, such as metal chips.

5. An assembly element according to one of Claims 1 to 4, characterized in that the recess (4) is in the area of the head plate 1 in the shape of a prism with a cylindrical or conical cavity (5) inside the pin (2) adjoining it.

**Revendications**

1. Elément d'assemblage pour emballages, notamment en carton ondulé, constitué d'une vis (2) pourvue d'un filetage (3), présentant une tête (1) dépassant le diamètre de filetage, un évidement (4) étant prévu au centre de la tête et conçu dans la zone de la tête comme orifice de prise pour un outil de rotation, caractérisé par le fait que le sommet (6) du filetage (3) se trouve en dehors de l'axe de symétrie de la tête (1).

2. Elément d'assemblage suivant revendication 1, caractérisé par le fait que la longueur totale de l'élément d'assemblage correspond à peu près au diamètre de la tête (1).

3. Elément d'assemblage suivant revendications 1 et 2, caractérisé par le fait que la vis (2) est conçue conique en tant que fond de filet et que la profondeur de pas respective correspond à peu près au diamètre de vis local.

4. Elément d'assemblage suivant l'une des revendications 1 à 3, caractérisé par le fait qu'il est en matière plastique, le cas échéant avec des additifs comprenant des sous-produits tels que des copeaux de métal.

5. Elément d'assemblage suivant l'une des revendications 1 à 4, caractérisé par le fait que l'évidement (4) dans la zone de la tête est conçu comme prisme, auquel se rallie à l'intérieur de la vis (2) une cavité cylindrique ou conique (5).

FIG.1

FIG.2